# EUROPEAN PATENT APPLICATION

(11) **EP 0 974 628 A2**
(43) Date of publication of application: **26.01.2000**
(21) Application number: 99110270.8
(22) Date of filing: 27.05.1999
(51) Int. Cl.: C09D 17/00, C09D 5/02

(54) **Universal water-dispersible pigmented pastes, zero V.O.C.**

(30) Priority: 29.05.1998 IT MI981190
(71) Applicant: SESTRIERE VERNICI S.r.l., 10042 Nichelino (TO) (IT)
(72) Inventor: Visioli, Flavio, 10125 Torino (IT)
(74) Representative: Minoja, Fabrizio, Dr.

(57) **Abstract**

Water-dispersible pigmented pastes are disclosed, having less than 10% of organic solvent containing:
a) 15% to 75% by weight of an organic or inorganic pigment;
b) 5% to 45% by weight of a polymeric ampholytic polyfunctional dispersant;
c) 0% to 4% by weight of rheology additives, with respect to the pigment;
d) water up to 100%.

## Description

This invention concerns universal water-dispersible pigmented pastes free from volatile organic compounds (zero v.o.c).

The pigmented pastes, or bases, which are the object of the present invention, can be used in tinting systems (mixing s.) which are made with several kinds of resin binders aimed at being used in the paint industry, by the paint distributors, in the wholesale retail or by the final users.

Every time the word "paint" occurs in the description, it will refer to any kind of water paint used in industry or in the market for protective or decorative use.

In common mixing systems, paints can be manufactured or coloured a) by the grinding system that means that several pigmented components, together with the resins, the solvents and the additives have to be mixed according to a well defined formulation b) by preparing white or coloured paints and by mixing them together in order to obtain the desired shade or c) by producing white or neutral paints and adding pigmented pastes based on organic and inorganic pigments which have to be previously dispersed.

The last mentioned system simplifies the production and allows to obtain any kind of colour of several different qualities by reducing the stocks and by increasing the production speed so that a quick service can be guarantee.

The system involves the use of several machines placed in the sales chain in order to have the colour requested by the customers directly in their tins. The binding compound of the white or the neutral paint (converter) according to specific quantities must be dosed in advance.

In order to produce special and well defined colours relating to standard colour books belonging to national or international manufacturers all formulations (i.e. RAL, BS, NCS, etc.) are included in a formula data bank which, through a proper interface, regulates the automatic delivery of the right mixture of pigmented bases in the pre-dosed paint which has already been put in tins for the retail or in special tanks for the industrial production.

Subsequently, the tin must be placed in a special machine which rotates it at an increasing speed for some minutes. This operation allows the manufacturer to obtain a paint which is ready for use.

In industrial plants the mixing process can be carried out using mixers having different potentiality connected to the tank dimensions.

It is also possible to connect the mixing machine to a portable spectrophotometer able to read the sample colour and to reproduce it immediately.

When using automatic mixing machines, particularly if fitted with spectrophotometer, it is preferable to control the delivery of the pigmented bases by their specific software. In this way, it is possible to save storage and costs and both the quality and the service can be improved; moreover, it should be stressed that white paints can be used either for a direct application or for their own colouring (with light or pastel colours), while only pigmented bases can be used to obtain strong colours.

The colouring pigmented bases now in the market, used in mixing machine systems, are made with a pigment dispersed in organic solvents, generally glycols, that, used in large amount, are used as dispersion and grinding agents. The most used solvents are: alkylene glycols, usually ethylene or propylene glycols, or mixture of water and diethylene glycol monoethyl ether.

Other essential components of these systems are: polyethylene glycol, cellulose ethers, hydroxyethyleneurea. Glycols influence the drying time of the product and have also the disadvantage of reducing its water resistance; moreover those components, especially ethylene glycols and some dispersants such as alkylphenolethoxylates, involve problems related to their toxicity with consequent negative effects for the safety of the working place and for the environment.

An example of those pigmented pastes is described in US 4,410,657 (Basf).

WO 97/08255, (6/03/1997 Tikkurila), describes pigmented pastes based on organic solvents wherein the thinners consist of a biodegradable lactic acid ester.

Water-dispersible pastes for mixing systems without volatile organic components have not been disclosed.

The availability of said pastes is a desirable goal because of its obvious economic and environmental advantages due to the use of water instead of glycols and/or organic solvents.

The invention provides water-dispersible pigmented pastes substantially free from organic solvents containing:
a) 15% to 75% by weight of an organic or inorganic pigment;
b) 5% to 45% by weight of a polymeric ampholytic polyfunctional dispersing agent;
c) 0% to 4% by weight rheology additives to the pigment;
d) water up to 100%.

The water-dispersible pastes of the invention are preferably completely free from volatile organic solvents even if the percentage of organic solvents in the pastes can be below 10%, preferably below 2%.

The pigments that can be used according to this invention are both organic and inorganic.

Inorganic pigments are for instance pigments in elementary form such as oxides and hydroxides oxides Ti02- Fe203-Fe0 (OH) etc. - Cr2 03, mixed oxides (4BiV04 ― 3 Bi2Mo6), (Co, Ni) 2Ti04, (BaS04) ― Silicates of Al, Mg, and K, etc.

Organic pigments belong to the following families:
- azo (monoazo, disazo, (β)-Naphthol, naphthol AS, benzimidazolone, disazo condensation, etc.;
- metal complex such as phthalocyanine, quinacridone, perinone and perylene, anthraquinone, isoindolinone and isoindoline, diketopyrrolopyrrole (DPP), quinophthalone dioxazine and fluorescent pigments.

In any case the main categories are those of the azo and non-azo (polycyclic) pigments.

Examples of inorganic pigments that can be used in this invention are reported in the following Table A.

**TABLE A**

| **INORGANIC PIGMENTS** | | |
|---|---|---|
| | **CHEMICAL NAME** | **C.I.(COLOR INDEX)** |
| | | |
| **YELLOWS** | Iron oxide | PY42 |
| | Nickel titanate | PY53 |
| | Bismuth vanadate | PY184 |
| **REDS** | Iron oxide | PR101 |
| **VIOLETS** | Ultramarine | PV15 |
| **BLUES** | Cobalt | PB28 |
| | Ultramarine | PB29 |
| | Cobalt | PB36 |
| **GREENS** | Chromium oxide | PG17 |
| | Cobalt | PG26 |
| | Cobalt | PG50 |
| **BROWNS** | Iron oxide | PBr6 |
| | Umbra | PBr7 |
| **BLACKS** | Chrome titanate | PBr24 |
| | Lamp black | PBk6 |
| | Carbon black | PBk7 |
| | Iron oxide | PBk11 |
| | Spinel black | PBk22 |
| | Cobalt | PBk27 |

Examples of organic pigments that can be used in this invention are reported in the following Table B.

**TABLE B**

| **ORGANIC PIGMENTS** | | | | | |
|---|---|---|---|---|---|
| **YELLOWS** | Flavanthrone | PY24 | **VIOLETS** | Quinacridone | PV19 |
| | Monoazo | PY74 | | Dioxazine | PV23 |
| | Diarylide | PY83 | | Perylene | PV29 |
| | Monoazo | PY97 | | Dioaxine | PV37 |
| | Anthrapyrimidine | PY108 | | | |
| | Isoindolinone | PY109 | **BLUES** | Phthalocyanine α-mod | PB15:2 |
| | Isoindolinone | PY110 | | Phthalocyanine β-mod | PB15:3 |
| | Benzimidazolone | PY120 | | Phthalocyanine β-mod | PB15:4 |
| | Disazo condensation | PY128 | | Metal free Phthalocyan. | PB16 |
| | Quinophthalone | PY138 | | Inanthrone | PB60 |
| | Isoindoline | PY139 | | Phthalocyanine mod. | 15:6 |
| | Benzimidazolone | PY151 | | | |
| | Benzimidazolone | PY154 | **BROWNS** | Benzimidazolone | PBr25 |
| | Bisacetoacetarylide | PY155 | | Isoindoline | PBr38 |
| | Benzimidazolone | PY175 | | Disazo condensation | PBr23 |
| | Benzimidazolone | PY194 | | | |
| | Isoindolinone | PY173 | | Diketopyrrolopyrrole | PR264 |
| **ORANGES REDS** | Benzimidazolone | PO36 | **ORANGES REDS** | Disazo condensation | PR144 |
| | Perinone | PO43 | | Disazo condensation | PR146 |
| | Pyranthrone | PO51 | | Naphtol AS | PR170 |
| | Benzimidazolone | PO62 | | Anthraquinone | PR168 |
| | Pyrazoloquinazolone | PR67 | | Perylene | PR178 |
| | BONA Mn | PR 48;4 | | Perylene | PR179 |
| | BONA Mn | PR 52:2 | | Naphthol AS | PR188 |
| | Thiondigo | PR88 | | Disazo condensation | PR202 |
| | Naphthol AS | PR112 | | Pyrazoloquinazolone | PR242 |
| | Quinacridone | PR122 | | Naphthol AS | PR251 |
| | Perylene | PR123 | | Diketopyrrolopyrrole | PR254 |
| **GREENS** | Phthalocyanine | PG7 | **BLACKS** | Perylene | PBk31 |
| | Phthalocyanine | PG36 | | Perylene | PBk32 |

The pigmented pastes of the invention may include, in addition to the colouring pigments, filling pigments such as aluminium silicate, mica, barium sulphate, baryta, aluminium hydrates, talc and silicate. The weight percentage of the colouring pigments (between 15% and 75%) will be determined according to the nature of the pigment.

A black carbon pigment, for instance, will be used in percentage close to 15% by weight while titanium dioxide will be used in percentage close to 75%; the optional filling pigments can be used in percentage close to 50% by weight.

During the pigment selection it is necessary to pay great care to the different kinds they will be used for.

The most important qualities for a pigment are:
colour, covering power, colouring power, tinting strength and also its possible reactivity to the alkaline medium it will be put in, ease of dispersion (wetting properties, water absorption), fineness (average diameter and particle distribution, specific area, gloss, light resistance, weather resistance, resistance to heat and to chemical agent.

Generally, pigments are supplied in powder (particles of ⌀ 20-100 microns) or in granules with particle diameter ranging from 2000 to 5000 microns. In the second case the crystalline pigments may lose their primitive form and create agglomerates or aggregates.

The primitive average particle of an organic pigment varies from 0.01 to 0.1 microns while the diameter of an inorganic pigment with a good covering power varies from 0.1 to 1 microns. The microfine filling pigment diameter varies from 1 to 5 microns.

The grinding process aims at reducing the pigment particles and their agglomerates, so as to provide the desired tonality and the best covering power.

The polymeric ampholytic polyfunctional dispersants are preferably acrylic acid polymers.

These polymers are commercially available under the trade names: Solsperse (Zeneca), Disperbyk (Byk Chemie), Efka Polymers (EFKA). Disperbyk 190 (Byk), consisting of an aqueous solution of a non-linear block acrylic polymer, is particularly preferred.

The pastes of the invention can further contain, with respect to the pigments (active substance), up to 4% by weight of other additives, e.g. rheology additives that can be used to increase viscosity, fluidity and also to check the sedimentation.

The paste components of the invention can be dispersed in tap, demineralized or distilled water, indifferently.

The good dispersion of the pigments is the main factor in terms of quality, stability of the final product and cost effectiveness.

It can be divided in the following phases:
1) Wetting of the particle surface. In this phase the interfacial tensions among the pigment particles are reduced. These compounds have a high surface activity and locate at the interface pigment/binder. The wetting properties can be influenced by the pigment agglomerates, by the binders, by their polarity, by their viscosity in the liquid phase and even by the empty spaces (porosity) inside the agglomerates.
2) Breaking and dispersing the pigment particles (agglomerates and aggregates).

Contrary to what has been described in the wetting phase, dispersion increases the absorption power of the additives which, in fact, tend to keep each pigment particles in well circumscribed spaces so that they can reduce the tendency to uncontrolled flocculation phenomena.

It can be stated that the optimisation of dispersion is technically achieved when, with respect to the pigment concentration, the lowest viscosity can be obtained while Zeta potential reaches its highest value and the particle sedimentation decreases to the lowest value.

Should the particles be too large, they would separate by sedimentation.

Final viscosity can be modified by adding additives to the pigment base, in order to prevent the pigment sedimentation.

Dispersion is induced by using apparatuses producing high shearing power and high kinetic energy.

Many kinds of apparatuses can be used, suited for continuous or discontinuous operations; for instance high speed mixers, ball mills, microsphere mills, colloidal mills, mixers, turbomixers, high speed disc dispersants, sub-mills, etc.

The pigment dispersion often depends on the process condition and on the machinery used rather than on the quantity of energy used during the dispersion phase.

At an early stage, the polymeric dispersant and water are mildly mixed together for some minutes, the pigment is then added, the mixing process becomes more vigorous and lasts for a certain period that may vary from 15 to 45 minutes.

The resulting paste is then ground to the desired particle-size.

The quantity of the pasta of the invention usually added to the white or neutral base paint ranges from 0% to 10% of the paint volume.

Contrary to the existing and well known solutions, it is not necessary, for instance, to add dispersing agents to the pigmented pastes. Said agents are based on alkylphenols which can be toxic for the environment, especially for water fauna; moreover, not only high percentages of some dispersing agents do not improve the system but they also impair the final properties of the film paint; furthermore, many dispersants may contain undesirable solvents.

The pastes obtained according to the invention are particularly stable, as shown by accelerated ageing tests in oven at 50 °C for more than 6 months. Gloss value, covering power, colouring power do not change during long term storage.

The availability of stable pigmented colouring pastes for all kinds of water-soluble paints allows now to create any colour without altering the final qualities of the paint such as gloss, drying process, polymerisation time (for two-component products), resistance to water, adhesion, hardness, etc. The colouring pastes meet any kind of requirements provided for by the health and the security laws for working place and while respecting the environment.

The pastes of this invention allow any manufacturer, distributor or user, to create any kind of water soluble paint in the various fields such as building trade, industry, body-work industry, by using pre-dosed binders (converters), to which the pigmented colouring paste must be added automatically or manually. This paste must be dosed according to specific formula books, in variable quantities (4% to 10%) in order to obtain any kind of colour in any kind of quality, according to the converter that has been used.

The automatic distribution of the pigmented pastes allows to use a PC together with its software to obtain any kind of colour, immediately.

Examples of paints which have been prepared with water-soluble converters are:
- in building trade: vinyl copolymer dispersion, acrylic copolymers, vinylversatic emulsions and acrylic dispersions, lime binders, silicates, syloxanes and concrete;
- in industry: alkyd resins and modified alkyd resins, acrylic and modified acrylic resins, epoxy ethers, epoxy and modified epoxy resins, esterified and acrylic modified polyurethane resins, aliphatic and/or aromatic resins.

The following example illustrate the invention in detail:

### Example:

### Preparation of the pigmented pastes

### 1) quantitative composition.

The quantitative composition of pigmented pastes according to the invention has been reported in the following Table 1

**TABLE N.1**

| N. PASTE | PIGMENT NATURE | % PIGMENT | POLYF.POLYM. DISPERSANT | RHEOLOGY MODIFIER | WATER |
|---|---|---|---|---|---|
| 1 | MonoazopigmentNaphthol AS | 25-35 | 11-20 | 2-4 | 41-63 |
| 2 | Monoazoic | 25-35 | 10-20 | 2-4 | 41-63 |
| 3 | MonoazopigmentNaphthol AS | 35-45 | 20-30 | 0,5-1 | 24-44.5 |
| 4 | Yellow iron oxide | 50-60 | 15-25 | 1-2 | 23-34 |
| 5 | Chromium green Oxide | 55-65 | 7.5-15 | 1-2 | 18-36.5 |
| 6 | Diketopyrrolo pyrrole | 15-25 | 7.5-15 | 3-4 | 56-74.5 |
| 7 | Black | 25-35 | 35-45 | 0.2-1 | 19-39.8 |
| 8 | Blue Phthalocyanine | 30-40 | 20-30 | 0.5-1.5 | 28.5-49.5 |
| 9 | Black | 15-25 | 30-40 | 0.2-1 | 34-54.8 |
| 10 | Green Phthalocyanine | 35-45 | 20-30 | 1-3 | 22-44 |
| 11 | Bismuth vanadate | 25-35 | 10-20 | 1-2 | 43-64 |
| 12 | Titan dioxide | 65-75 | 5-10 | 0.2-1 | 14-29.8 |
| 13 | Quinacridone | 15-25 | 10-20 | 1-3 | 52-74 |
| 14 | Acrylamide | 25-35 | 10-20 | 2-4 | 41-63 |
| 15 | Diarylamideparatoluidine | 25-35 | 10-20 | 2-4 | 41-63 |
| 16 | Iron oxide red | 45-55 | 15-25 | 2-3 | 17-38 |

### 2) Conditions for the preparation of the pastes are reported in Table 1.

The production methods of the pastes mentioned at point n. 1 and the corresponding analysis , are reported in Table 2A.

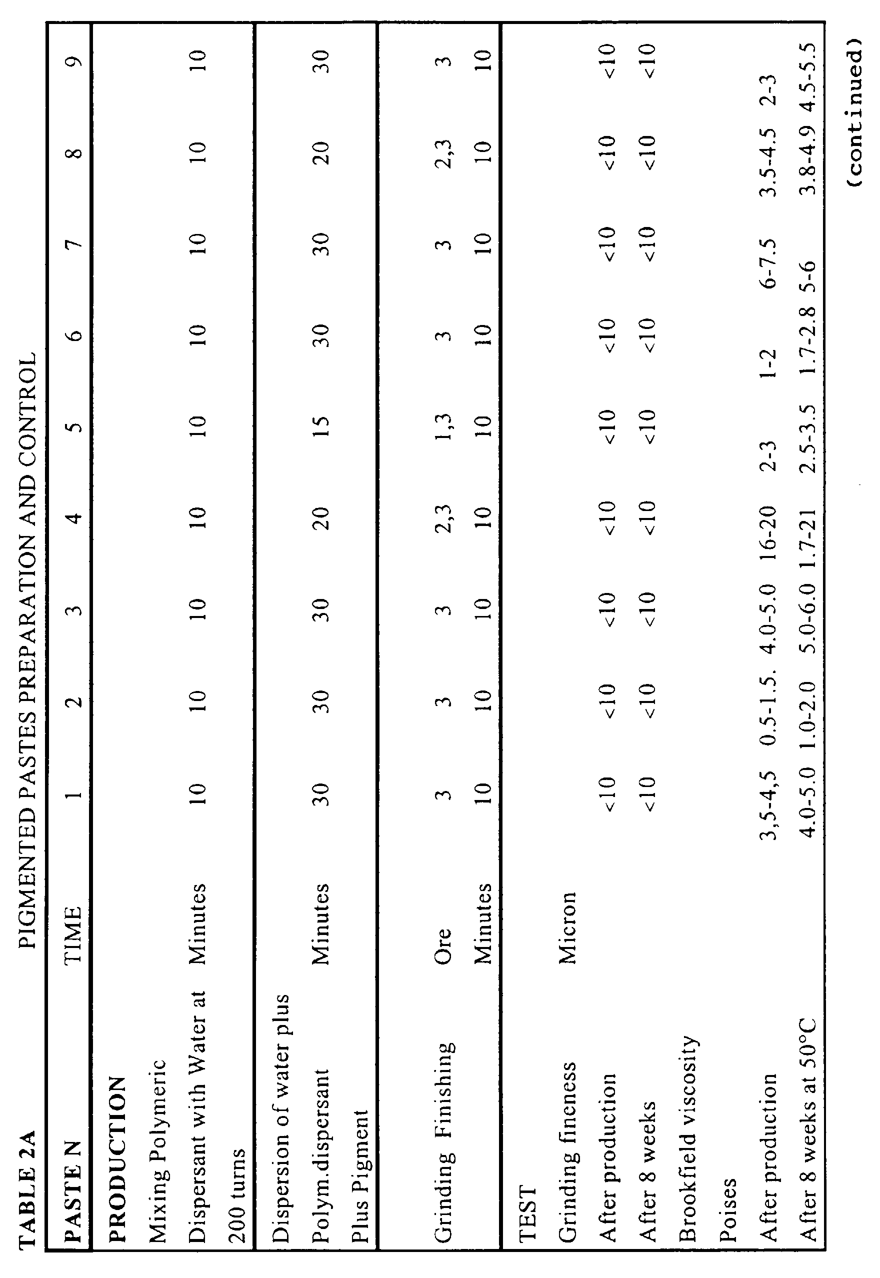

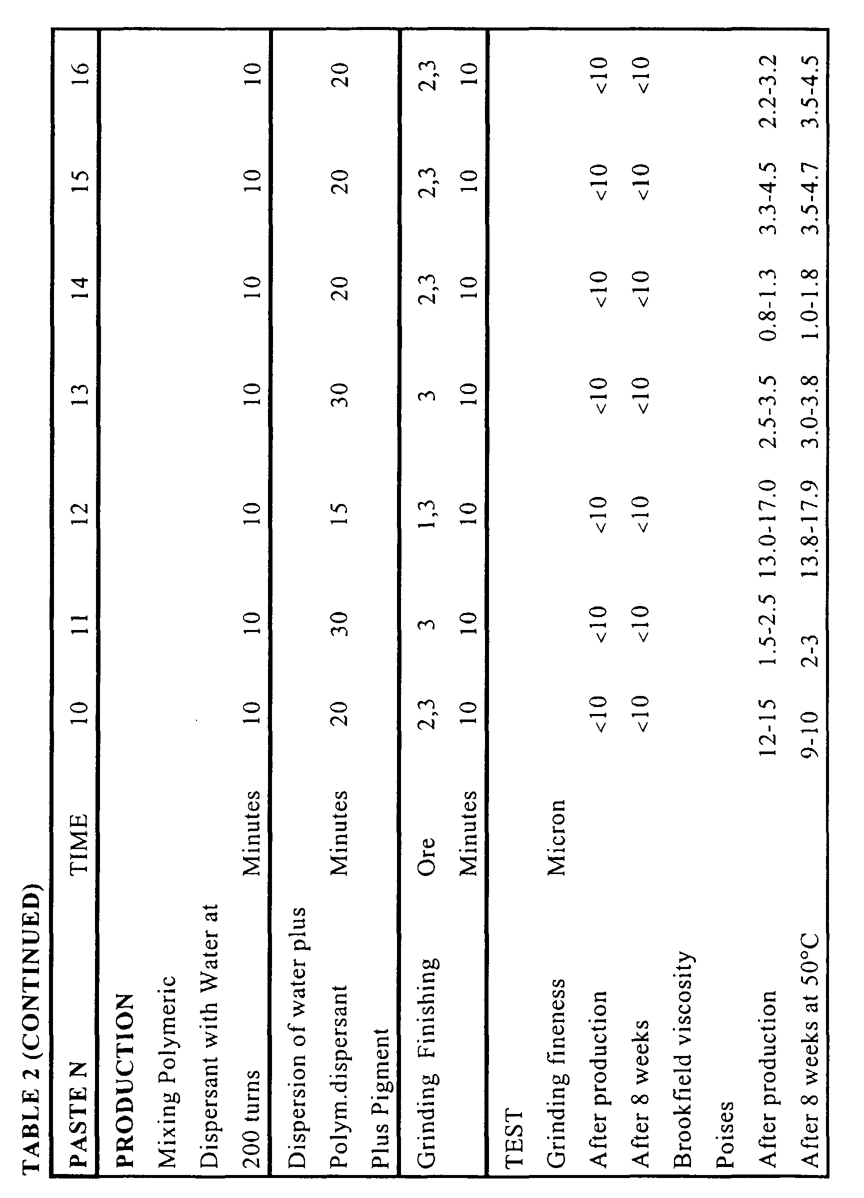

**TABLE N.2/B**

| | FORMULATION PROTOTYPE |
|---|---|
| | |

| **WHITE POLYURETHANE PAINT WATER BORNE** | |
|---|---|
| PRODUCT | PARTS (WEIGHT) |
| **PART A-BASE** | |
| | |
| MIXTURE | |
| Polyol | 13.00 |
| Water | 6.00 |
| Additives | 0.31 |
| Titanium dioxide | 35.65 |
| | |
| FINISHING | |
| Polyol | 30.59 |
| Water | 13.62 |
| Additives | 0.83 |
| | |
| TOTAL | 100 |
| | |

| **PART B - HARDENER** | |
|---|---|
| HID trimer isocyanate | 50 |
| | |
| TOTAL | 50 |

**TABLE 2/C**

| | FORMULATION PROTOTYPE |
|---|---|
| | |

| **WHITE ALKYD ENAMEL WATER BORNE** | |
|---|---|
| **PRODUCT** | **PARTS (WEIGHT)** |
| | |
| Short alkyd resin oil 100% | 11.90 |
| Neutralising agents | 0.90 |
| Water | 2.40 |
| Additives | 0.55 |
| Water | 15.70 |
| Rheology agent | 0.20 |
| Titanium dioxide | 22.00 |
| Barium sulphate | 5.80 |
| Coalescent agents | 5 |
| | |

| FINISHING | |
|---|---|
| Short alkyd resin oil 100% | 11.90 |
| Neutralising agents | 0.90 |
| Coalescent agents | 0.12 |
| Additives | 0.12 |
| Dryers aqueous solution | 2.51 |
| Water | 20.00 |
| **TOTAL** | **100** |
| | |

The pigmented pastes mentioned above are able to colour the pigmented paints and any kind of water product.

Tests have been made by mixing for 2 minutes the colouring pastes delivered by our automatic mixing machine in a white paint base.

The properties of the paints have been checked at 22° C and 50% H.R

| | |
|---|---|
| a) Flocculation | Rub-out |
| b) Gloss | ISO 2813 |
| c) Hardness | ISO 1522 D |
| d) Spectrophotometric control of the colouring spreading rate. | Spectrophotometer Datacolor |

The flocculation test has been carried out as follows:

4% of each pigmented paste has been added to 300 ml of base paint. The thus coloured paint has been applied through 100-200 microns coaters on white Morest contrast papers and dried. Afterwards, a drop of the same fresh paint has been put on the same surface, beside the already dried paint, spreading it beside the dried one with a circular movement of the finger. The rub-out test is passed if both dried paints show no tonality difference (see Table 3). Any difference would mean that pigment flocculation has occurred, which has to be evaluated on s scale 0 to 3:
a) 0 = no flocculation
b) 3= strong flocculation

The addition of pigmented pastes to a paint can be critical since no flocculation should occur, otherwise the paint tonality that has to be produced could change and some flaws could appear on surface.

In order to check hardness and gloss it is necessary to add 10% of pigmented paste to 300 ml of white base paint.

After the usual mixing, the pigments are spread on two slides of different thickness, by using a coater (see Table 4).

In both tests panels, paint hardness is estimated by the Konig Pendulum after 1-17-18 days from the drying process.

The gloss values are measured after 18 days with a glossmeter at 60°C.

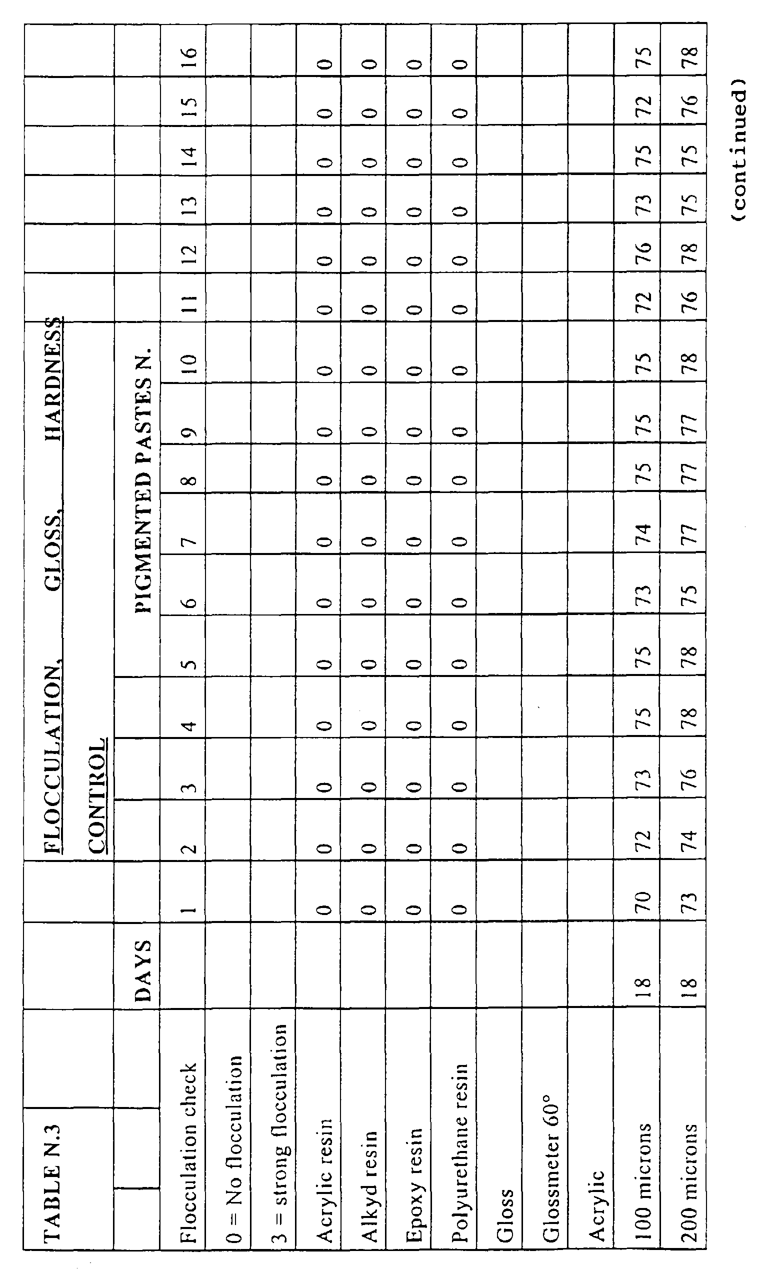

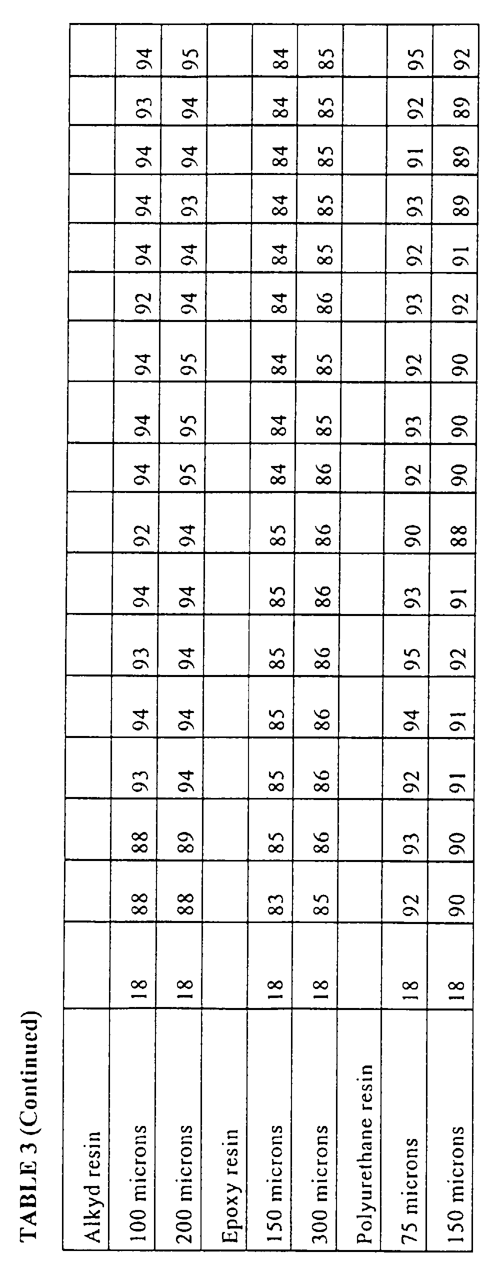

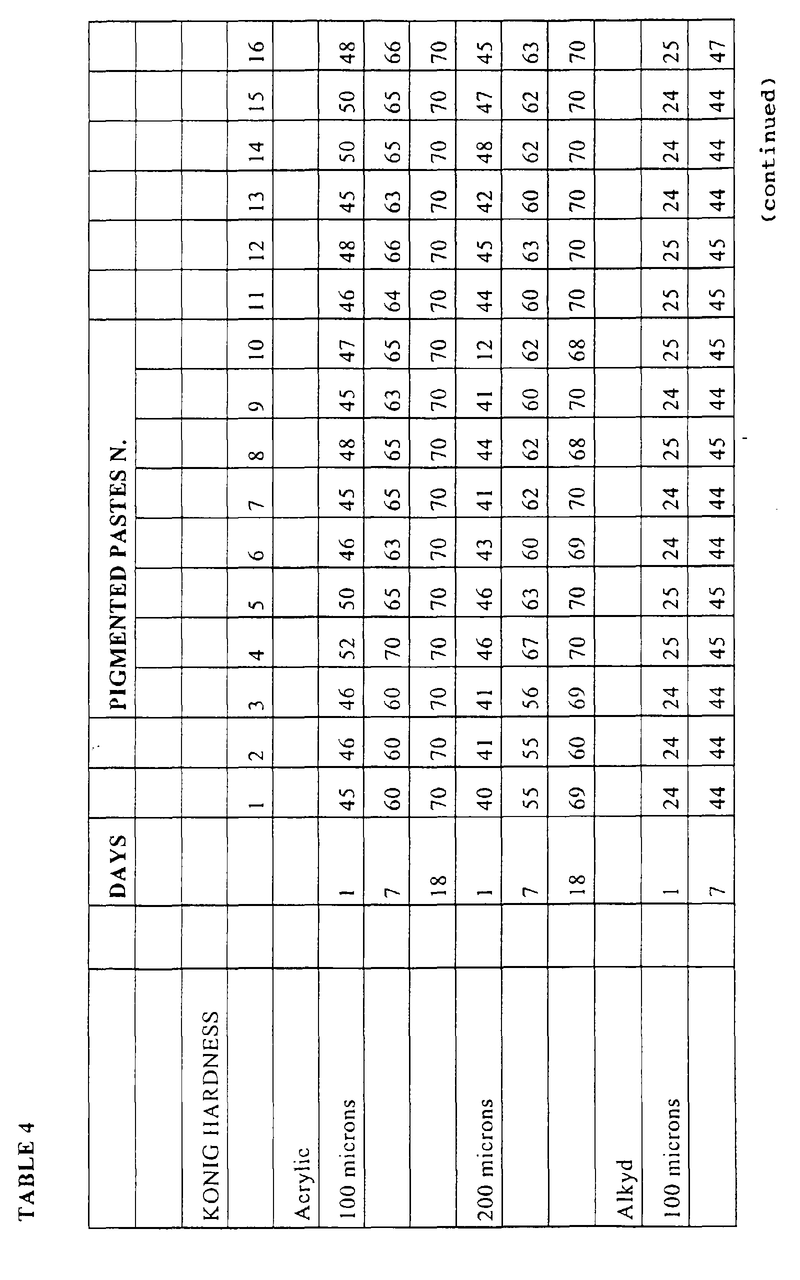

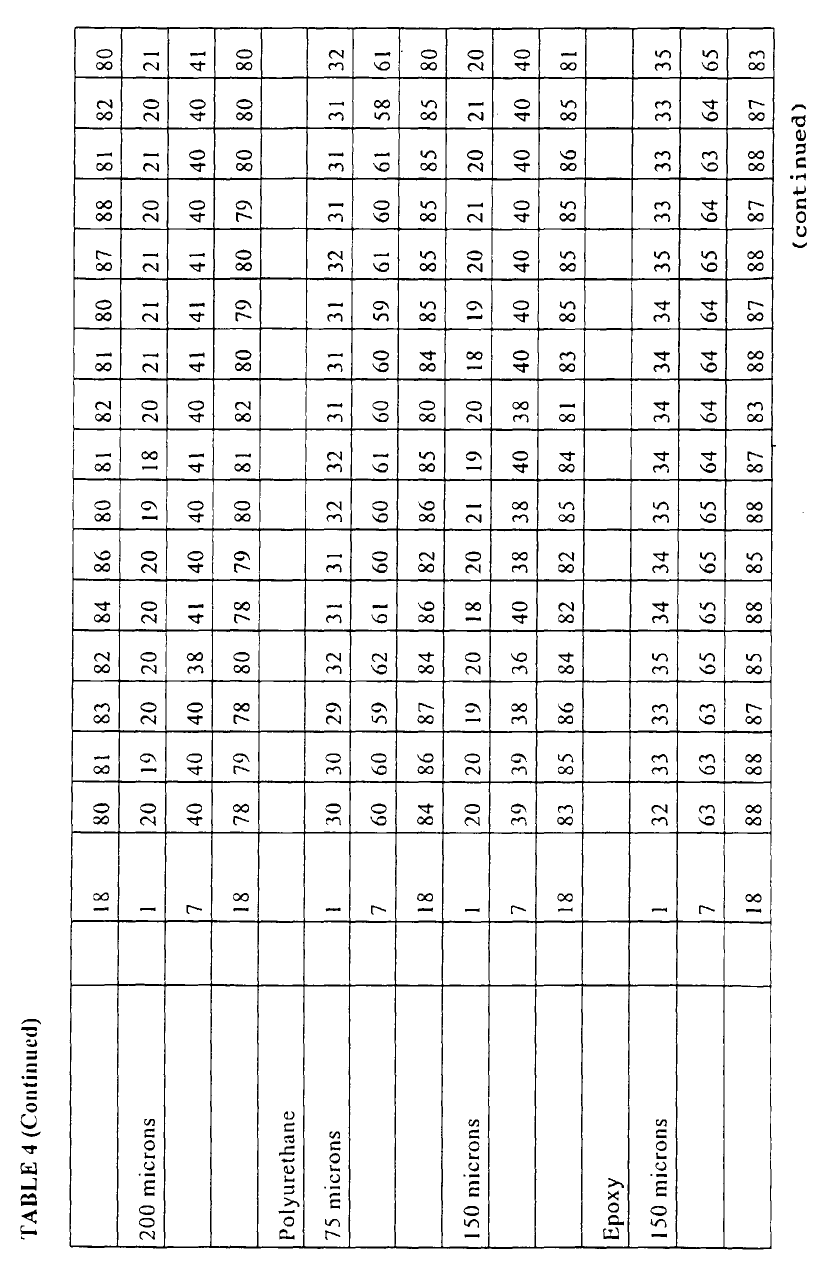

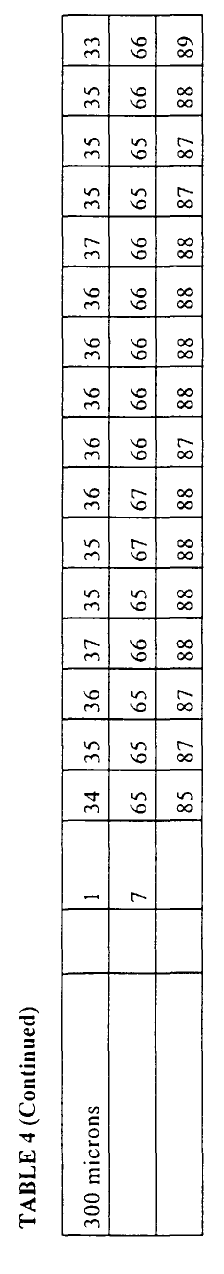

## Claims

1. Water-dispersible pigmented pastes substantially free from organic solvents containing:
a) 15% to 75% by weight of an organic or inorganic pigment;
b) 5% to 45% by weight of a polymeric ampholytic polyfunctional dispersant;
c) 0% to 4% by weight of rheology additives, with respect to the pigments;
d) water up to 100%.

2. Pigmented pastes according to claim 1 in which the polymeric dispersant is an acrylic polymer.

3. Pigmented pastes according to claim 2 in which the dispersant is selected from Disperbyk, Solsperse or Efka Polymers®.

4. Pigmented pastes according to claim 3 in which the dispersant is Disperbyk-190.

5. A mixing system including the pigmented pastes of claims 1-4 and optionally an automatic dosing system for the pastes.

6. Water-dispersible paints obtainable by mixing the pastes of claims 1-4 with suitable converters.

7. The use of the pigmented pastes of claims 1-4 for the preparation of water-dispersible paints.
